# EUROPEAN PATENT SPECIFICATION

(11) **EP 2 903 951 B1**
(45) Date of publication and mention of the grant of the patent: **09.05.2018**
(21) Application number: 13709455.3
(22) Date of filing: 15.03.2013
(51) Int. Cl.: C04B 35/185, C04B 38/00, C04B 35/478, F01N 3/022

(54) **CERAMIC STRUCTURES**
KERAMIKSTRUKTUREN
STRUCTURES EN CÉRAMIQUE

(30) Priority: 05.10.2012 EP 12290332
(43) Date of publication of application: 12.08.2015
(73) Proprietor: Imerys, 75007 Paris (FR)
(72) Inventor: ALARY, Jean Andre, F-84800 L'Isle sur la Sorgue (FR); GARCIA-PÉREZ, Pascual, E-36780 A Guarda Pontevedra (ES); GIRAUD, Jean-Paul, F-41250 Neuvy (FR)
(74) Representative: Rushton, David John
(86) International application number: PCT/EP2013/055485
(87) International publication number: WO 2014/053251

(56) References cited:
- WO-A1-2009/076985
- WO-A1-2011/117385
- WO-A1-2012/135401
- KR-A- 20100 135 699
- J. ADLER: INT. J. APPL. CERAM. TECHNOL., vol. 2, no. 6, 2005, pages 429-439, XP002690306, cited in the application
- N.F. POPOVSKAYA, N. M. BOBKOVA: "Mullite-Tialite Ceramic Materials Based On Chemically Precipitated Mixtures", GLASS AND CERAMICS, vol. 59, no. 7-8, 15 July 2002 (2002-07-15), - 17 July 2002 (2002-07-17), pages 234-236, XP002690307, ISSN: 0361-7610, DOI: 10.1023/A:1020979228914

## Description

### TECHNICAL FIELD

The present application is directed to a ceramic composition, optionally in the form of a honeycomb structure, to ceramic precursor compositions suitable for sintering to form said ceramic composition, to a method for preparing said ceramic composition and ceramic honeycomb structure, to a diesel particulate filter comprising said ceramic honeycomb structure which may be comprised in a vehicle.

### BACKGROUND OF THE INVENTION

Ceramic structures, particularly ceramic honeycomb structures, are known in the art for the manufacture of filters for liquid and gaseous media. The most relevant application today is in the use of such ceramic structures as particle filters for the removal of fine particles from the exhaust gas of diesel engines of vehicles (diesel particulates), since those fine particulates have been shown to have negative influence on human health.

The ceramic material has to fulfil several requirements. First, the material should have sufficient filtering efficiency, i.e., the exhaust gas passing the filter should be substantially free of diesel particulates, but the filter should not produce a substantial pressure drop, i.e., it must show a sufficient ability to let the exhaust gas stream pass through its walls. These parameters generally depend upon the wall parameters (thickness, porosity, pore size, etc.) of the filter.

Second, the material must show sufficient chemical resistance against the compounds in exhaust gas of diesel engines over a broad temperature range.

Third, the material must be resistant against thermal shock due to the high temperature differences that apply during its life cycle. Thus, the material should have a low coefficient of thermal expansion to avoid mechanical tensions during heating and cooling periods.

Fourth, the material must have a melting point above the temperatures reached (typically > 1000°C) within the filter during a regeneration cycle.

If the above requirements are not fulfilled, mechanical and/or thermal tension may cause cracks in the ceramic material, resulting in decrease of filter efficiency or even filter failure.

Further, since the filters for vehicles are produced in high numbers, the ceramic material should be relatively inexpensive, and the process for its manufacture should be cost-effective.

A summary on the ceramic materials known for this application is given in the paper of J. Adler, Int. J. Appl. Ceram. Technol. 2005, 2(6), p429-439.

Several ceramic materials have been described for the manufacture of ceramic honeycomb filters suitable for that specific application.

For example, honeycombs made from ceramic materials based on mullite and tialite have been used for the construction of diesel particulate filters. Mullite is an aluminium and silicon containing silicate mineral of variable composition between the two defined phases [3Al₂O₃•2SiO₂] (the so-called "stoichiometric" mullite or "3:2 mullite") and [2Al₂O₃•1SiO₂] (the so-called "2:1 mullite"). The material is known to have a high melting point and fair mechanical properties, but relatively poor thermal shock properties. Tialite is an aluminium titanate having the formula [Al₂Ti₂O₅]. The material is known to show a high thermal shock resistance, low thermal expansion and a high melting point.

Owing to these properties, tialite has traditionally been a favoured material of choice for the manufacture of honeycomb structures. For example, US-A-20070063398 describes porous bodies for use as particulate filters comprising over 90 % tialite. Similarly, US-A-20100230870 describes ceramic bodies suitable for use as particulate filters having an aluminium titanate content of over 90 mass %.

N.F. Popovskaya et al., Glass and Ceramics, vol. 59, no 7-8, 15 July 2002 describes synthesis conditions and properties of mullite-tialite ceramic materials based on chemically precipitated mixtures.

Attempts have also been made to combine the positive properties of mullite and tialite, e.g., by developing ceramic materials comprising both phases.

WO-A-2009/076985 describes a ceramic honeycomb structure comprising a mineral phase of mullite and a mineral phase of tialite. The examples describe a variety of ceramic structures typically comprising at least about 65 vol. % mullite and less than 15 vol. % tialite. According to one example, a honeycomb consisting of 72 % 3:2 mullite, 13 % andalusite, 8 % amorphous phase and 7 % tialite was prepared. The honeycomb had a total porosity of 47.5% and a standard three point modulus of rupture (MOR) test along the axis of the sample showed a fracture force of 99N.

There is a need in the art for new ceramic filter materials showing properties comparable to or improved over those of the prior art. It has now been found that a ceramic material providing desirable mechanical strength in combination with excellent thermal shock resistance can be manufactured which comprises a relatively low amount of tialite phase (compared to conventional honeycombs having very high tialite content) in combination with an amount of mullite. This is surprising given that mullite, relative to tialite, is known to have relatively poor thermal shock properties.

### SUMMARY OF THE INVENTION

The present invention is defined in and by the appended claims.

In accordance with a first aspect, there is provided a ceramic composition comprising:
from 25 wt. % to 60 wt. % tialite;
from 35 wt. % to 60 wt. % mullite;
from 0.1 wt. % to 8 wt. % zirconia and/or
from 0.1 wt. % to 10 wt. % zirconium titanate;
from 0 wt. % to 10 wt. % of an amorphous phase;
from 0 wt. % to 5 wt. % of an alkaline earth metal oxide; and
from 0 wt. % to 10 wt. % alumina (calculated on the basis of the total weight of mineral phases);
wherein said ceramic composition has a porosity of from about 30 % to about 70 % (calculated on the basis of the total volume of the mineral phases and pore space).

In accordance with a second aspect, there is provided the ceramic composition of the first aspect of the present invention in the form of a honeycomb structure.

In accordance with a third aspect, there is provided a ceramic precursor composition suitable for sintering to form a ceramic composition according to the first aspect of the present invention, said precursor composition comprising:
from 20 wt. % to 55 wt. % aluminosilicate;
from 15 wt. % to 35 wt. % titania and/or titania precursor;
from 25 wt. % to 45 wt. % alumina (Al₂O₃);
from 0 wt. % to 5 wt. % alkaline earth metal oxide and/or alkaline earth metal oxide precursor;
from 0.5 wt. % to 15 wt. % zirconia and/or zirconia precursor;
and from 1 wt. % to 30 wt. % pore former.

In accordance with a fourth aspect, there is provided a ceramic precursor composition suitable for firing to form a ceramic composition according to the first aspect of the present invention, said precursor composition comprising:
from 20 wt. % to 55 wt. % aluminosilicate;
from 45 wt. % to 75 wt. % of a tialite- and mullite containing chamotte;
from 0 wt. % to 20 wt. % alumina
from 0 wt. % to 5 wt. % alkaline earth metal oxide and/or alkaline earth metal oxide precursor; and
from 0.5 wt. % to 15 wt. % zirconia and/or zirconia precursor;
and from 1 wt. % to 30 wt. % pore former.

In accordance with a fifth aspect, there is provided a method for making a ceramic honeycomb structure according to the second aspect of the present invention, said method comprising the steps of:
(a) providing a dried green honeycomb structure formed from the ceramic precursor composition according to any one of the third or fourth aspects of the present invention; and
(b) sintering.

In accordance with a sixth aspect, there is provided a diesel particulate filter comprising or made from the ceramic honeycomb structure according to the second aspect of the present invention, or the ceramic honeycomb structure obtainable by the method of the fifth aspect of the present invention and wherein the diesel particulate filter may be comprised in a vehicle having a diesel engine and a filtration system.

### DETAILED DESCRIPTION OF THE INVENTION

The "total volume of the mineral phases" of a ceramic composition, e.g., a ceramic honeycomb structure, refers to the total volume of the honeycomb without the pore volume, i.e., only solid phases are considered. The "total volume of the mineral phases and pore space" refers to the apparent volume of the ceramic composition, e.g., ceramic honeycomb structure, i.e., including solid phases and pore volume.

The amounts of tialite, mullite and other mineral phases in the ceramic composition or ceramic honeycomb structure may be measured using qualitative X-ray diffraction (Cu Kα radiation, Rietveld analysis with a 30 wt. % ZnO standard), or any other measurement method which gives an equivalent result. As will be understood by the skilled person, in the X-ray diffraction method, the sample is milled and passed completely through a 45 µm mesh. After milling and sieving, the powder is homogenized, and then filled into the sample holder of the X-ray diffractometer. The powder is pressed into the holder and any overlapping powder is removed to ensure an even surface. After placing the sample holder containing the sample into the X-ray diffractometer, the measurement is started. Typical measurement conditions are a step width of 0.01°, a measurement time of 2 seconds per step and a measurement range from 5 to 80° 2θ. The resulting diffraction pattern is used for the quantification of the different phases, which the sample material consists of, by using appropriate software capable of Rietveld refinement. A suitable diffractometer is a SIEMENS D500/501, and suitable Rietveld software is BRUKER AXS DIFFRAC*^{plus}* TOPAS. The amount of each mineral phase in the ceramic composition, e.g., ceramic honeycomb structure, is expressed as a weight % based on the total weight of the mineral phases.

Unless otherwise stated, the particle size properties referred to herein for the mineral starting material are as measured by the well known conventional method employed in the art of laser light scattering, using a Malvern Mastersizer S machine as supplied by Malvern Instruments Ltd (or by other methods which give essentially the same result). In the laser light scattering technique, the size of particles in powders, suspensions and emulsions may be measured using the diffraction of a laser beam, based on an application of Mie theory. Such a machine provides measurements and a plot of the cumulative percentage by volume of particles having a size, referred to in the art as the equivalent spherical diameter' (e.s.d), less than given e.s.d values. The mean particle size d₅₀ is the value determined in this way of the particle e.s.d at which there are 50% by volume of the particles which have an equivalent spherical diameter less than that d₅₀ value. The d₁₀ and d₉₀ are to be understood in similar fashion.

Unless otherwise stated, in each case, the lower limit of a range is the d₁₀ value and the upper limit of the range is the d₉₀ value.

In the case of colloidal titania, the particle size is measured using transmission electron microscopy.

Unless otherwise stated, the measurement of the particle sizes of components which are present in the sintered ceramic composition or honeycomb structure in a particulate form may be accomplished by image analysis.

### Ceramic composition

In embodiments, the ceramic composition, e.g., ceramic honeycomb structure, comprises (on a weight % basis):
- 25-60 %, or 35-60 %, or 40-60 %, or 40-55 %, or 40-50%, or 45-55 %, or 45-50 %, or 50-55 % tialite;
- 35-60 %, or 40-60 %, or 40-55 %, or 40-50 %, or 45-55 %, or 45-50 %, or 50-55 % mullite;
- 0-8 %, or 0-5 %, or 0-3 %, or 0-2 %, or 0-1 % zirconia;
- 0-10 %, or 0-5 %, 0-3 %, or 0-2 %, or 0-1 % zirconium titanate;
- 0-10 %, or 0-5, or 0-3 %, or 0-2 %, or 0-1 % of an amorphous phase;
- 0-5 %, or 0-4 %, or 0-3 %, or 0-2 %, or 0-1 % of an alkaline earth metal oxide; and
- 0-10 %, or 0-7 %, or 0-5 %, or 0-4 %, or 0-3 %, or 0-2 %, or 0-1 % alumina provided that there is present at least 0.1 % zirconia and/or zirconium titanate.

In certain embodiments, the ceramic composition comprises from about 35-60 % tialite and from about 35-60 % mullite.

In further embodiments, the ceramic composition comprises 40-55 % tialite and 40-55 % mullite, for example, 40-50 % tialite and 45-55 % mullite, or 45-55 % tialite and 40-50 % mullite, or 40-45 % tialite and 40-55 % mullite, or 40-45 % tialite and 40-50 % mullite, or 40-45 % tialite and 45-55 % mullite, or 40-45 % tialite and 45-50 % mullite.

In certain embodiments, the ratio mullite to tialite is lower than 2:1, for example, lower than 1.8:1, or lower than 1.6:1, or equal to or lower than about 1.5:1, or equal to or lower than about 1.4:1, or equal to or lower than about 1.3:1, or equal to or lower than about 1.2:1, or equal to or lower than about 1.1:1, or equal to or lower than about 1:1, or equal to or lower than about 1:1.2.

In certain embodiments, the mullite and tialite mineral phases constitute at least about 90 % of the total weight of the mineral phases, for example, at least about 92 % of the total weight of the mineral phases, or at least about 94 %, or at least about 96 %, or at least about 97 %, or at least about 98 %, or at least about 99 % of total weight of the mineral phases.

In certain embodiment, the ceramic composition comprises less than about 50 wt. % tialite, for example, less than about 49 wt. % tialite, or less than about 48 wt. % tialite, or less than about 47 wt. % tialite, or less than about 46 % tialite, or less than about 45 wt. % tialite, or less than about 44 wt. % tialite, or less than about 43 wt. % tialite, or less than about 42 wt. % tialite, or less than about 41 wt. % tialite, or less than about 40 wt. % tialite.

In certain embodiments, the ceramic composition comprises at least about 0.1 wt. % zirconia, for example, at least about 0.25 wt. % zirconia, or at least about 0. 5 wt. % zirconia. Additionally or alternatively, the ceramic composition may comprise at least about 0.1 wt. % of said amorphous phase, for example, at least about 0.25 wt. % of said amorphous phase, or at least about 0.5 wt. % of said amorphous phase. Additionally or alternatively, the ceramic composition may comprise at least about 0.1 wt. % alumina, for example, at least about 0.25 wt. % alumina, or at least about 0.5 wt. % alumina. Additionally or alternatively, the ceramic composition may comprise at least about 0.1 wt. % alkaline earth metal oxide, for example, at least about 0.25 wt. % alkaline earth metal oxide, or at least about 0.5 wt. % alkaline earth metal oxide. Additionally or alternatively, the ceramic composition may comprise at least about 0.1 wt. % zirconium titanate, for example, at least about 0.25 wt. % zirconium titanate, or at least about 0.5 wt. % zirconium titanate.

In certain embodiments, the ceramic composition is substantially free of alumina mineral phases and/or aluminosilicate mineral phases and/or titania mineral phases and/or an amorphous phase and/or zirconium titanate mineral phases and/or alkaline earth metal oxide mineral phases.

When present, the alkaline earth metal oxide may be strontium oxide, magnesium oxide, calcium oxide, barium oxide or a combination thereof. In an embodiment, the alkaline earth metal oxide is magnesium oxide.

As used herein, the term "substantially free" refers to the total absence of or near total absence of a specific compound or composition or mineral phase. For example, when the ceramic composition is said to be substantially free of alumina, there is either no alumina in the ceramic composition or only trace amounts of alumina in the composition. A person skilled in the art will understand that a trace amount is an amount which may be detectable by the XRD method described above, but not quantifiable and moreover, if present, would not adversely affect the properties of the ceramic composition or ceramic honeycomb structure.

The amorphous phase may comprise, consist essentially of, or consist of a glassy silica phase. The glassy silica phase may form from decomposition of aluminosilicate, for example, andalusite, during mullitization, typically at sintering temperatures between about 1300°C and 1600°C.

Depending on the starting materials, the zirconia phase may be ZrO₂ or may be a zirconia phase comprising Ti, e.g., Tiₓ Zr₁₋ₓO₂, wherein x is from 0.1 to about 0.9, for example, greater than about 0.5. In embodiments, the zirconia phase may comprise a mixture of ZrO₂ and Tiₓ Zr₁₋ₓO₂.

The ceramic composition, for example, ceramic honeycomb structure, is porous having a porosity in the range of from about 30 % to about 70 %. In one embodiment, the porosity is from about 35 % to about 65 %, for example, from about 40 % to about 65 %, or from about 35 % to about 60 %, or from about 40 % to about 60 %. In a further embodiment, the porosity is from about 35 % to about 50 %, for example, from about 35 % to about 45 %, or from about 35 % to about 40 %, or from about 40 % to about 45 % (calculated on the basis of the total volume of the mineral phases and pore space). Pore space (e.g., total pore volume) may be determined by mercury diffusion as measured using a Thermo Scientific Mercury Porosimiter - Pascal 140, with a contact angle of 130 degrees, or any other measurement method which gives an equivalent result.

The ceramic compositions and ceramic honeycomb structures of any of the above embodiments may have a coefficient of thermal expansion (CTE) of equal to or less than about 3.5 x 10⁻⁶ °C⁻¹, as measured at 800°C by dilatometry according to DIN 51045. In certain embodiments, the CTE may be equal to or less than about 3.0 x 10⁻⁶ °C⁻¹, for example, equal to or less than about 2.75 x 10⁻⁶ °C⁻¹, or equal to or less than about 2.5 x 10⁻⁶ °C⁻¹, or equal to or less than about 2.25 x 10⁻⁶ °C⁻¹, or equal to or less than about 2.0 x 10⁻⁶ °C⁻¹, equal to or less than about 1.9 x 10⁻⁶ °C⁻¹, or equal to or less than about 1.8 x 10⁻⁶ °C⁻¹, or equal to or less than about 1.7 x 10⁻⁶ °C⁻¹ or equal to or less than about 1.6 x 10⁻⁶ °C⁻¹ or equal to or less than about 1.5 x 10⁻⁶ °C⁻¹ . Typically, the CTE will be greater than about 0.1 x 10⁻⁶ °C⁻¹, for example, greater than about 0.5 x 10⁻⁶ °C⁻¹, or even greater than about 1.0 x 10⁻⁶ °C⁻¹.

The ceramic compositions and ceramic honeycomb structures of any of the above embodiments may have a modulus of rupture (MOR) of at least about 1.5 MPa, as measured in accordance with ASTM C 1674-08 (Standard Test Method for Flexural Strength of Advanced Ceramics with Engineered Porosity (Honeycomb Cellular Channels at Ambient Temperature). MOR was measured following Test Method A (see section 1.3.1 of ASTM C 1674-08) and it was a 3-point bending test with user-defined specimen geometries. In the test method a test specimen with a user-defined rectangular geometry rests on two supports and is loaded by means of a loading roller midway between the two outer supports. A suitable test specimen geometry is defined for the particular honeycomb structure being tested (composition, architecture, cell size, mechanical properties) using the guidelines provided in section 9.2 of ASTM C 1674-08. The user defined specimen geometry is selected such that the test gives valid test data (failure in the gage section without major crushing failure or shear failure).

In certain embodiments, the ceramic composition has a MOR of at least about 2.0 MPa, for example, at least about 2.5 MPa, or at least about 3.0 MPa, or at least about 3. 5 MPa, or at least about 4.0 MPa. Typically, the MOR will be less than about 20 MPa, for example, less than about 15 MPa, or less than about 10 MPa, or less than about 8 MPa, or less than about 6 MPa.

The ceramic compositions and ceramic honeycomb structures of any of the above embodiments may have a Young's Modulus of at least about 5 GPa, as measured in accordance with DIN EN 843-2:2007. In certain embodiments, the Young's Modulus may be between about 5 and 25 GPa, for example, equal to or less than about 22 GPa, or equal to or less than about 20 GPa, or equal to or less than about 18 GPa, or equal to or less than about 16 GPa, or equal to or less than about 14 GPa, or equal to or less than about 12 GPa, or equal to or less than about 10 GPa.

The ceramic compositions and ceramic honeycomb structures of any of the above embodiments may be characterized in terms of their ratio of MOR to CTE. This ratio may be used to compare the thermomechanical behaviour of ceramic materials. The ratio is calculated by dividing the numerical value of MOR (in Pa) by the numerical value of CTE (in reciprocal °C). For example, a ceramic composition having a MOR of 3.0 MPa (i.e., 3 x10⁶ Pa) and a CTE of 2.75 x 10⁻⁶ °C⁻¹ has a MOR/CTE of 1.09 x 10¹² Pa.°C. In certain embodiments, the ceramic composition has a ratio of MOR/CTE of greater than about 6.0 x 10¹¹ Pa.°C, with the proviso that the CTE is equal to or less than about 3.5 x 10⁻⁶ °C⁻¹, for example, greater than about 9.0 x 10¹¹ Pa.°C, for example, greater than about 1.1 x 10¹² Pa.°C, or greater than about 1.3 x 10¹² Pa.°C, or greater than about 1.5 x 10¹² Pa.°C, or greater than about 1.7 x 10¹² Pa.°C, or greater than about 1.9 x 10¹² Pa.°C.

The ceramic compositions and ceramic honeycomb structures of any of the above embodiments may be characterized in terms of a factor designated R1*, which is [MOR/(CTE x Young's Modulus)]. This factor is commonly used by persons of skill in the art. In certain embodiments, the ceramic composition or honeycomb structure has a R1* of at least about 30°C, for example, at least about 45°C, or at least about 60°C, or at least about 75°C, or at least about 90°C, or at least about 105°C, or at least about 130°C, or at least about 150°C, or at least about 175°C. Typically, the R1* is less than about 500°C, or less than about 350°C, or less than about 250°C, or less than about 230°C, or less than about 210°C.

The presence of the tialite phase improves the thermal shock resistance of the ceramic structure. Further, the tialite phase is stabilized at temperatures above 1350°C (tialite per se is known to be normally unstable at such temperatures). Further despite the relatively low amount of tialite in the ceramic structures, the ceramic structures exhibit thermomechanical properties suitable for use in diesel particulate filter applications. This finding is contrary to conventional wisdom in the art.

In an embodiment, the amount of iron in the ceramic composition or ceramic honeycomb structure, measured as Fe₂O₃, is less than 5 % by weight, and for example may be less than about 2 wt. %, or for example less than about 1 wt. %, or for example less than about 0.75 wt. %, or for example less than about 0.50 wt. %, or for example less than about 0.25 wt. %. The structure may be essentially free from iron, as may be achieved for example by using starting materials which are essentially free of iron. Iron content, measured as Fe₂O₃, may be measured by XRF.

In an embodiment, the amount of strontium, measured as SrO, is less than about 2 wt. %, and for example less than about 1 wt. %, or for example less than about 0.75 wt. %, or for example less than about 0.50 wt. %, or for example less than about 0.25 wt. %. The structure may be essentially free from strontium, as may be achieved for example by using starting materials which are essentially free of strontium. Strontium content, measured as SrO₂, may be measured by XRF.

In an embodiment, the amount of chromium, measured as Cr₂O₃, is less than about 2 wt. %, and for example less than about 1 wt. %, or for example less than about 0.75 wt. %, or for example less than about 0.50 wt. %, or for example less than about 0.25 wt. %. The structure may be essentially free from chromium, as may be achieved for example by using starting materials which are essentially free of chromium. Chromium content, measured as Cr₂O₃, may be measured by XRF.

In an embodiment, the amount of tungsten, measured as W₂O₃, is less than about 2 wt. %, and for example less than about 1 wt. %, or for example less than about 0.75 wt. %, or for example less than about 0.50 wt. %, or for example less than about 0.25 wt. %. The structure may be essentially free from tungsten, as may be achieved for example by using starting materials which are essentially free of tungsten. Tungsten content, measured as W₂O₃, may be measured by XRF.

In an embodiment, the amount of yttria, measured as Y₂O₃, is less than about 2.5 wt. %, for example, less than about 2.0 wt. %, for example, less than about 1.5 wt. %, for example, less than about 1 wt. %, for example, less than about 0.5 wt. %, for example, in the range of about 0.3-0.4 wt. %. Any yttria present may be derived from yttria-stabilized zirconia which in embodiments may be used as a source of zirconia. The structure may be essentially free from yttria, as may be achieved for example by using starting materials which are essentially free of yttria. Yttria content, measured as Y₂O₃, may be measured by XRF.

In an embodiment, the amount of rare earth metals, measured as Ln₂O₃ (wherein Ln represents any one or more of the lanthanide elements La, Ce, Pr, Nd, Pm, Sm, Eu, Gd, Tb, Dy, Ho, Er, Tm, Yb and Lu), is less than about 2 wt. %, and for example less than about 1 wt. %, or for example less than about 0.75 wt. %, or for example less than about 0.50 wt. %, or for example less than about 0.25 wt. %. The structure may be essentially free from rare earth metals, as may be achieved for example by using starting materials which are essentially free of rare earth metals. Rare earth content, measured as Ln₂O₃, may be measured by XRF.

The ceramic composition, for example, ceramic honeycomb structure, is formed by sintering a ceramic precursor composition, as described below.

### Ceramic precursor compositions

Unless otherwise stated, the amounts expressed in wt. % (or weight %' or '% by weight') below are based on the total weight of inorganic mineral components in each of the ceramic precursor compositions, i.e., excluding solvent (e.g., water), binder, auxiliant, pore forming agents and any other non-inorganic mineral components.

The solid mineral compounds suitable for use as raw materials in the present invention (aluminosilicate, alumina, titania, tialite, mullite, chamotte, etc.) can be used in the form of powders, suspensions, dispersions, and the like. Corresponding formulations are commercially available and known to the skilled person in the art. For example, powdered andalusite having a particle size range suitable for the present invention is commercially available under the trade name Kerphalite (Damrec), powdered alumina and alumina dispersions are available from Evonik Gmbh or Nabaltec, and powdered titania and titania dispersions are available from Cristal Global.

In accordance with the third aspect of the present invention, the ceramic precursor composition comprises (weight %):
- 20-55 %, or 20-45 %, or 20-40 %, or 25-40 %, or 30-50 %, or 25-35 %, or 30-40 %, or 40-50 %, or 35-45 % aluminosilicate;
- 15-35 %, or 20-30 %, or 22-27 % titania;
- 25-45 %, or 30-45 %, or 35-40 %, or 30-40 %, or 35-45 %, 37-45 %, or 40-45 % alumina;
- 0-5 %, or 0.5-4 %, or 1-4 %, or 1-3 %, or 1-2 %, 2-3 % alkaline earth metal oxide and/or alkaline earth metal oxide precursor; and
- 0-15 %, or 0.5-10 %, or 0.5-4 %, or 1-4 %, or 1-3 %, or 1-2 %, 2-3 zirconia;
and from 1 wt. % to 30 wt. % pore former.

In a further embodiment, the ceramic precursor composition comprises (weight %):
- 28-50 %, or 30-50 %, or 28-40 % aluminosilicate; and/or
- 20-30 %, or 22-27 % titania; and/or
- 38-45, or 40-45 % alumina; and/or
- 1-3 % alkaline earth metal oxide and/or alkaline earth metal oxide precursor; and/or
- 1-4 % zirconia and from 1 wt. % to 30 wt. % pore former.

In embodiments, the relative amounts of aluminosilicate, titania, alumina and zirconia, if present, are selected such that upon sintering the ceramic precursor composition at a suitable temperature, e.g., above about 1400°C, or above about 1500°C, a ceramic composition or ceramic honeycomb structure according to the first aspect and second aspects of the present invention is obtained. In particularly advantageous embodiments, the relative amounts of tialite-forming and mullite forming components of the ceramic precursor composition are selected such that upon sintering the ceramic precursor composition at a suitable temperature, e.g., above about 1400°C, or above about 1500°C, or 1550°C and above, the resulting ceramic composition or ceramic honeycomb structure comprises 40-55 % tialite and 40-55 % mullite, for example, 40-50 % tialite and 45-55 % mullite, or 45-55 % tialite and 40-50 % mullite, or 40-45 % tialite and 40-55 % mullite, or 40-45 % tialite and 40-50 % mullite, or 40-45 % tialite and 45-55 % mullite, or 40-45 % tialite and 45-50 % mullite (calculated on the basis of the total weight of mineral phases in the ceramic composition or honeycomb structure).

The aluminosilicate may be selected from one or more of andalusite, kyanite, sillimanite, mullite, molochite, a hydrous kandite clay such as kaolin, halloysite or ball clay, or an anhydrous (calcined) kandite clay such as metakaolin or fully calcined kaolin. In further embodiments, the aluminosilicate is selected from one or more of andalusite and kaolin. In a further embodiment, the aluminosilicate is andalusite.

In a further embodiment, the aluminosilicate, for example andalusite, is present in the ceramic precursor composition in the form of particles present in a size in the range between 0.1 µm and 55 µm, or between 0.1 µm and 80 µm, or between 10 µm and 55 µm, or between 10 µm and 75 µm, or between 15 µm and 55 µm, or between 15 µm and 75 µm, or between 20 µm and 55 µm, or between 20 µm and 75 µm. In a further embodiment, the aluminosilicate, for example andalusite, is in the form of particles having a size in the range between 0.1 µm and 125 µm, or between 0.1 µm and 100 µm, or between 0.1 µm and 75 µm, or between 25 µm and 100 µm, or between 25 µm and 75 µm.

The titania may be selected from one or more of rutile, anatase, brookite.

The zirconia may be selected from one or more of ZrO₂ and TiₓZr₁₋ₓO₂ (as described above). The present inventors have surprisingly found that the inclusion of zirconia in the ceramic precursor composition can have an advantageous effect on process characteristics and the thermomechanical properties of the sintered ceramic composition. For example, the presence of a relatively small amount of ZrO₂, e.g., less than about 2 wt. %, can accelerate the mullitization process (primary and secondary) during sintering. Thus, with the inclusion of ZrO₂, the alumina content of the final sintered ceramic can be reduced, which has a beneficial effect in reducing the CTE of the sintered ceramic. In other words, it appears the presence of ZrO₂ enhances the reactivity of alumina. Further, the inclusion of ZrO₂ may facilitate primary and secondary mullitization at lower reaction temperatures.

In embodiments, the alumina is selected from one or more of fused alumina (e.g., corundum), sintered alumina, calcined alumina, reactive or semi-reactive alumina, and bauxite.

In a further embodiment, the alumina is present in the form of particles having a size in the range between 0.1 to 100 µm, or in the range between 0.1 to 75 µm, or in the range between 0.1 to 50 µm, or in the range between 0.1 to 25 µm, or in the range between 0.1 to 10 µm, or in the range between 0.1 to 1 µm, or between 0.3 to 0.6 µm. In a further embodiment, the alumina is used in the form of colloidal/nanometric solutions. In all of the above embodiments comprising the use of alumina (Al₂O₃), titania (TiO₂) and zirconia (ZrO₂), the alumina, titania and/or zirconia may be partially or fully replaced by alumina, titania and/or zirconia precursor compounds. By the term "alumina precursor compounds", such compounds are understood which may comprise one or more additional components to aluminum (Al) and oxygen (O), which additional components are removed during subjecting the alumina precursor compound to sintering conditions, and wherein the additional components are volatile under sintering conditions. Thus, although the alumina precursor compound may have a total formula different from Al₂O₃, only a component with a formula Al₂O₃ (or its reaction product with further solid phases) is left behind after sintering. Thus, the amount of alumina precursor compound present in an extrudable mixture or green honeycomb structure according to the invention can be easily recalculated to represent a specific equivalent of alumina (Al₂O₃). The terms "titania precursor compound" and "zirconia precursor compound" are to be understood in similar fashion.

Examples for alumina precursor compounds include, but are not limited to aluminum salts such as aluminum phosphates, and aluminum sulphates, or aluminum hydroxides such as boehmite (AIO(OH) and gibbsite (Al(OH)₃). The additional hydrogen and oxygen components present in those compounds are set free during sintering in the form of water. Usually, alumina precursor compounds are more reactive in solid phase reactions occurring under sintering conditions, than alumina (Al₂O₃) itself. Moreover, several of the alumina precursor compounds are available in preparations showing very small particle sizes, which also leads to an increased reactivity of the particles under sintering conditions.

The aluminosilicate and in (part) alumina are the main mullite-forming components of the ceramic precursor composition of the third aspect of the present invention. During primary mullitization, aluminosilicate decomposes and mullite forms. In secondary mullitization, excess silica from the aluminosilicate reacts with any remaining alumina, forming further mullite. As described below, the ceramic precursor composition may be sintered to a suitably high temperature, for example, between about 1550°C and 1600°C, such that substantially all aluminosilicate and alumina has been consumed in the primary and secondary mullitization stages.

Alumina and titania are the main tialite-forming components of the ceramic precursor composition of the third aspect of the present invention. In certain embodiments,, the alumina is present in the form of particles having a size in the range between 0.1 to 100 µm, or in the range between 0.1 to 75 µm, or in the range between 0.1 to 50 µm, or in the range between 0.1 to 25 µm, or in the range between 0.1 to 10 µm, or between 0.1 to 1 µm, or between 0.3 to 0.6 µm. In a further embodiment, the alumina is used in the form of colloidal/nanometric solutions. In a further embodiment, the titania is present in the form of particles having a size in the range between 0.1 to 100 µm, or in the range between 0.1 to 50 µm, or in the range between 0.1 to 10 µm, or between 0.1 to 1 µm, or between 0.3 to 50 µm, or between 0.3 to 1 µm, or between 0.3 to 0.6 µm. In a further embodiment, the titania is present in the form of particles having a size in the range between 0.1 to 10 µm, or between 0.2 to 1 µm, or between 0.2 to 0.5 µm. In a further embodiment, the titania is used in the form of colloidal/nanometric solutions. Where colloidal titania is used, this may be employed together with a non-colloidal form of titania, for example one having a d₅₀ smaller than 1 µm, for example a d₅₀ smaller than 0.5 µm. In a further embodiment, the size of the titania particles is larger than the size of the alumina particles. In a further embodiment, the amount of the alumina in the ceramic precursor composition is higher than the amount of titania.

Because the components of the ceramic precursor composition may have different particle size ranges, the ceramic precursor composition may have a bimodal or multimodal particle size distribution. In other embodiments, particle size ranges of components may be selected such that the ceramic precursor composition has a monomodal particle size distribution. In further embodiments, the ceramic precursor composition may be subjected to size classification step, for example, by milling or sieving, prior to a forming step (e.g., extrusion) to homogenize the mixture particle size distribution, e.g., milling to obtain a ceramic precursor composition having a monomodal particle size distribution.

In certain embodiments, the ceramic precursor composition comprises an amount of alkaline earth metal oxide or alkaline earth metal oxide precursor, or combinations thereof. The alkaline earth metal oxide may be magnesium oxide, calcium oxide, barium oxide, or combinations thereof. The alkaline earth metal oxide precursor may be an alkaline earth metal salt, for example, an alkaline earth metal sulphide, sulphate, chloride, nitrate or carbonate, in which the alkaline earth metal may be magnesium, strontium, calcium, barium or combinations thereof. In certain embodiments, the alkaline earth metal oxide precursor is an alkaline earth metal carbonate, which may be magnesium carbonate, strontium carbonate, calcium carbonate, barium carbonate or mixtures thereof. In embodiments, the carbonate is magnesium or calcium carbonate, or combinations thereof. In an advantageous embodiment, the carbonate is magnesium carbonate. The amount of alkaline earth metal oxide and/or alkaline earth metal oxide precursor, for example, magnesium carbonate, may be from about 1-4 wt. %, based on the total weight of the ceramic precursor composition. The present inventors having surprisingly found that the inclusion of alkaline earth metal oxide or oxide precursor, in particular magnesium carbonate, can have an advantageous effect on process characteristics. Further the formation or presence of alkaline earth metal oxide, for example, magnesium oxide, in the ceramic composition can have an advantageous effect on the thermomechanical properties of the sintered ceramic composition. For example, the presence of magnesium carbonate can promote densification at lower temperatures compared to a ceramic precursor composition which does not contain magnesium carbonate. Further, the presence or formation of magnesium oxide during sintering can lead to a decrease in the CTE of the sintered ceramic composition.

In accordance with the fourth aspect of the present invention, the ceramic precursor composition comprises (weight %):
- 20-55 %, or 30-50, or 20-40 %, or 25-40 %, or 25-35 %, or 30-40 %, or 40-50 %, or 35-45 % aluminosilicate;
- 45-75 %, or 50-75 %, or 50-70 %, or 50-60 %, or 5-55 %, or 55-75 %, or 60-75%, 60-70%, or 60-65 %, or 62-67 %, or 65-75 %, or 65-70 % of a tialite- and mullite-containing chamotte;
- up to 20 %, or 5-20 % alumina, or 5-15 %, or 10-20 % or 5-10 %, or 6-12 % alumina;
- 0-5 %, or 0.5-4 %, or 1-4 %, or 1-3 %, or 1-2 %, 2-3 % alkaline earth metal oxide and/or alkaline earth metal oxide precursor; and
- 0.5-15 %, or 0.5-10 %, or 0.5-4 %, or 1-4 %, or 1-3 %, or 1-2 %, 2-3 zirconia and/or zirconia precursor; and from 1 wt. % to 30 wt. % pore former.

In embodiments, the relative amounts of aluminosilicate and tialite/mullite-containing chamotte are selected such that upon sintering the ceramic precursor composition at a suitable temperature, e.g., above about 1400°C, or above about 1500°C, a ceramic composition or ceramic honeycomb structure according to the first aspect and second aspects of the present invention is obtained. In particularly advantageous embodiments, the relative amounts of aluminosilicate and tialite/mullite containing chamotte are selected such that upon sintering the ceramic precursor composition at a suitable temperature, e.g., above about 1500°C, or 1550°C and above, the resulting ceramic composition or ceramic honeycomb structure comprises 40-55 % tialite and 40-55 % mullite, for example, 40-50 % tialite and 45-55 % mullite, or 45-55 % tialite and 40-50 % mullite, or 40-45 % tialite and 40-55 % mullite, or 40-45 % tialite and 40-50 % mullite, or 40-45 % tialite and 45-55 % mullite, or 40-45 % tialite and 45-50 % mullite.

In certain embodiments, the ratio mullite to tialite is lower than 2:1, for example, lower than 1.8:1, or lower than 1.6:1, or equal to or lower than about 1.5:1, or equal to or lower than about 1.4:1, or equal to or lower than about 1.3:1, or equal to or lower than about 1.2:1, or equal to or lower than about 1.1:1, or equal to or lower than about 1:1, or equal to or lower than about 1:1.2.

In certain embodiments, the mullite and tialite mineral phases constitute at least about 80 % of the total weight of the mineral phases, for example, at least about 85 % of the total weight of the mineral phases, or at least about 90 % of the total weight of the mineral phases, or at least about 92 % of the total weight of the mineral phases, or at least about 94 %, or at least about 96 %, or at least about 97 %, or at least about 98 %, or at least about 99 % of total weight of the mineral phases.

In certain embodiments, at least about 80 % by weight of the tialite/mullite containing chamotte is tialite and mullite mineral phases (calculated on the basis of the total weight of the mineral phases in the tialite/mullite containing chamotte), for example, at least about 85 % by weight, or at least about 90 % by weight, or at least about 92 % by weight, or at least about 94 % by weight, or at least about 95 % by weight, or at least about 96 % by weight, or at least about 97 % by weight, or at least about 98 % by weight of the tialite/mullite containing chamotte is tialite and mullite mineral phases. In these embodiments, the ratio of tialite to mullite may range from about 1:1 to about 3:1. The mineral phase composition of the tialite/mullite containing chamotte may be determined in accordance with the qualitative XRD method described above.

Typically, the alumina content of the tialite/mullite containing chamotte is less than about 5 % by weight, for example, equal to or less than about 4 % by weight, equal to or less than about 3 % by weight, equal to or less than about 2 % by weight, equal to or less than about 1 % by weight. In some embodiments, the tialite/mullite containing chamotte is substantially free of alumina. In other embodiments, the tialite/mullite containing chamotte comprise at least about 0.1 % by weight alumina, for example, at least about 0.5 % by weight alumina. If the tialite/mullite containing chamotte contains alumina this may be consumed during sintering of the ceramic precursor composition, for example, during a secondary mullitization step (by reaction with any excess silica from the aluminosilicate).

The tialite/mullite containing chamotte may have a CTE of less than about 3.0 x 10⁻⁶ °C⁻¹, as measured at 800°C by dilatometry according to DIN 51045. In certain embodiments, the CTE may be equal to or less than about 2.50 x 10⁻⁶ °C⁻¹, for example, equal to or less than about 2.0 x 10⁻⁶ °C⁻¹, or equal to or less than about 1.75 x 10⁻⁶ °C⁻¹, or equal to or less than about 1.5 x 10⁻⁶ °C⁻¹.

The tialite/mullite containing chamotte may be prepared by sintering a mixture of raw materials in suitable amounts and at a suitable temperature. The person skilled in the art will be able to determine suitable raw materials, amounts and sintering temperature depending on the desired composition of the tialite/mullite containing chamotte. Suitable raw materials include aluminosilicate (including the types described above), alumina (including types described above) and titania (including the types described above). The amount of aluminosilicate may be in the range of about 10-30 wt. %, based on the total weight of the raw inorganic mineral materials, for example, in the range of about 15-25 wt. %, or 18-22 wt. %. The amount of alumina may be in the range of about 35-55 wt. %, based on the total weight of the raw inorganic mineral materials, for example, in the range of about 35-55 wt. %, or 40-50 wt. %, or 40-45 wt. %. The amount of titania (or titania precursor) may be in the range of about 25-40 wt. %, for example, from about 25-35 wt. %, or from about 30-35 wt. %. The raw material mixture may comprise minor amounts of further materials suitable for sintering, e.g., zirconia. The raw materials are typically mixed using conventional mixing means with a suitable amount of water and optional binder and/or auxiliant components (as described below). Following mixing the mixture is typically dried, optionally heated in a debindering step, optionally ground and then sintered at a suitable temperature, typically greater than about 1500°C, or greater than about 1550°C, or up to about 1600°C. The sintered chamotte material may be subjected to a milling step, e.g., jet-milling, to modify the particle size distribution, e.g., to obtain a monomodal particle size distribution. For example, the sintered tialite/mullite containing chamotte may be milled to obtain a chamotte having a d₅₀ ranging from about 2 µm to about 30 µm, for example, from about 5 µm to about 25 µm.

For use in the ceramic precursor composition of the fourth aspect of the present invention, tialite/mullite chamotte having the same mineral phase composition but different particle size distribution may be used in combination. For example, a tialite/mullite chamotte (of fixed composition) having a relatively fine particle size distribution may be used in combination with a tialite/mullite chamotte (of the same fixed composition) having a relatively coarse particle size distribution. Further, various combinations of tialite/mullite containing chamotte (of fixed composition) and aluminosilicate, each having a different particle size distribution may be used in the ceramic precursor composition of the fourth aspect of the present invention. This may result in a ceramic precursor composition characterized in having a bimodal or multimodal particle size distribution. Alternatively, the particle size distribution of the tialite/mullite containing chamotte and aluminosilicate may be selected such that the particle size distribution of the ceramic precursor composition is characterized in having a monomodal particle size distribution.

The type, form (i.e., particle size) and amounts of aluminosilicate, alumina, titiania, zirconia and alkaline earth metal carbonate that may be used in the ceramic precursor composition of the fourth aspect of the present invention are the same as those described above in connection with the ceramic precursor composition of the third aspect of the present invention.

In a further embodiment, either of the ceramic precursor compositions of the present invention comprises a graphite component. The graphite can be present in an amount of up to about 55 % (based on the total weight of the inorganic mineral components), for example, from about 1 to about 40 %, or from about 1 to about 25 wt. %, or from about 5 to about 20 wt. %, or from about 5 to about 15 wt. %, or form about 5 to about 10 wt. %, or from about 10 to about 20 wt. %, or from about 10 to about 15 wt. %. The graphite material can be used in a particulate form, wherein the particles have a size of less than 200 µm, or less than 150 µm, or less than 100 µm. In another embodiment, the graphite particles have a median particle diameter (d₅₀) between 0 and 100 µm; or between 5 µm to 50 µm, or between 7 µm and 30 µm, or between 20 µm and 30 µm. The graphite may be included as a pore former, as described below.

The binding agents and auxiliants that may be used in the present invention are all commercially available from various sources known to the skilled person in the art.

The function of the binding agent is to provide a sufficient mechanical stability of the green honeycomb structure in the process steps before the heating or sintering. The additional auxiliants provide the raw material, i.e., ceramic precursor composition, with advantageous properties of the extrusion step (e.g., plasticizers, glidants, lubricants, and the like).

In embodiments, the ceramic precursor composition (or the extrudable mixture or green honeycomb structure formed therefrom) comprises one or more binding agents selected from the group consisting of, methyl cellulose, hydroxymethylpropyl cellulose, polyvinyl butyrals, emulsified acrylates, polyvinyl alcohols, polyvinyl pyrrolidones, polyacrylics, starch, silicon binders, polyacrylates, silicates, polyethylene imine, lignosulfonates, and alginates.

In a further embodiment, the ceramic precursor composition (or the extrudable mixture or green honeycomb structure formed therefrom) comprises one or more mineral binders. Suitable mineral binder may be selected from the group including, but not limited to, one or more of bentonite, aluminum phosphate, boehmite, sodium silicates, boron silicates, or mixtures thereof.

The binding agents can be present in a total amount between about 0.5 and 20 %, for example, from about 0.5 % and 15 %, or between about 2 % and 9 % (based on the total weight of inorganic mineral components in the ceramic precursor composition or extrudable mixture or the green honeycomb structure).

In a further embodiment, the ceramic precursor composition (or the extrudable mixture or green honeycomb formed therefrom) comprises one or more auxiliants (e.g. plasticizers and lubricants) selected from the groups consisting of polyethylene glycols (PEGs), glycerol, ethylene glycol, octyl phthalates, ammonium stearates, wax emulsions, oleic acid, Manhattan fish oil, stearic acid, wax, palmitic acid, linoleic acid, myristic acid, and lauric acid.

The auxiliants can be present in a total amount between about 0.5 % and about 40 %, for example, from about 0.5 % to about 30 %, or from about 0.5 % and about 25 %, or from about 0.5 % and about 15 %, or between 2 % and 9 % (based on the total weight of inorganic mineral components in the ceramic precursor composition or extrudable mixture or the green honeycomb structure.

Each of the ceramic precursor compositions of the third and fourth aspects of the present invention may be combined with solvent. The solvent may be an organic or aqueous liquid medium. In certain embodiments, the solvent is water. The solvent, e.g., water, may be present in an amount ranging from about 1-55 wt. %, based on the total weight of inorganic mineral components in the ceramic precursor composition, for example, from about 5 to about 40 wt. %, or from about 10 to about 35 wt. %, or from about 15 to about 30 wt. %, or from about 20 to about 30 wt. %, or from about 22 to about 28 wt. %.

Each of the ceramic precursor compositions of the third and fourth aspects of the present invention comprise an amount of pore former. The pore former is any chemical entity which, when included in the ceramic precursor composition, induces or otherwise facilitates the creation of porosity in the ceramic composition formed by sintering the ceramic precursor composition. Suitable pore formers include graphite (as described above) or other forms of carbon, cellulose and cellulose derivatives, starch, organic polymers and mixtures thereof. Pore former is present in an amount ranging from about 1 and 30 wt. %, based on the total weight of inorganic mineral components in the ceramic precursor composition, for example, from about 2 to about 25 wt. %, or from about 2 to about 20 wt. %, or from about 2 to about 15 wt. %, or from about 4 to about 12 wt. %, or from about 4 to about 10 wt. %, or from about 5 to about 8 wt. %.

### Preparative methods

The preparation of an extrudable mixture from the mineral compounds, i.e., the ceramic precursor composition (optionally in combination with binding agent(s), mineral binder(s) and/or auxiliant(s)) is performed according to methods and techniques known in the art. For, example, the components of the ceramic precursor composition can be mixed in a conventional kneading machine with the addition of a suitable amount of a suitable liquid phase as needed (normally water) to a slurry or paste suitable for extrusion. Additionally, conventional extruding equipment (such as, e.g., a screw extruder) and dies for the extrusion of honeycomb structures known in the art can be used. A summary of the technology is given in the textbook of W. Kollenberg (ed.), Technische Keramik, Vulkan-Verlag, Essen, Germany, 2004, which is incorporated herein by reference.

The diameter of the green honeycomb structures can be determined by selecting extruder dies of desired size and shape. After extrusion, the extruded mass is cut into pieces of suitable length to obtain green honeycomb structures of desired format. Suitable cutting means for this step (such as wire cutters) are known to the person skilled in the art.

The extruded green honeycomb structure can be dried according to methods known in the art (e.g., microwave drying, hot-air drying) prior to sintering. Alternatively, the drying step can be performed by exposing the green honeycomb structure to an atmosphere with controlled humidity at predefined temperatures in the range between 20 °C and 90 °C over an extended period of time in a climate chamber, where the humidity of the surrounding air is reduced in a step-by-step manner, while the temperature is correspondingly increased. For example, one drying program for the green honeycomb structures of the present invention is as follows:
- maintaining a relative air humidity of higher than about 70 % at room temperature for two days;
- maintaining a relative air humidity of higher than about 60 % at 50 °C for three hours;
- maintaining a relative air humidity of higher than about 50 % at 75 °C for three hours; and
- maintaining a relative air humidity of lower than about 50 % at 85 °C for twelve hours.

The dried green honeycomb structure is then heated in a conventional oven or kiln for preparation of ceramic materials. Generally, any oven or kiln that is suitable to subject the heated objects to a predefined temperature is suitable for the process of the invention.

When the green honeycomb structure comprises organic binder compound and/or organic auxiliants, usually the structure is heated to a temperature in the range between 200°C and 400°C, for example, between about 200°C and 300°C, prior to heating the structure to the final sintering temperature, and that temperature is maintained for a period of time that is sufficient to remove the organic binder and auxiliant compounds by means of combustion (for example, between one and three hours). For example, one heating program for the manufacture of ceramic honeycomb structures of the present invention is as follows:
- heating from ambient temperature to 250 °C with a heating rate of 0.5 °C/min;
- maintaining the temperature of 250 °C for up to about two hours;
- heating to the final sintering temperature with a heating rate of 2.0 °C/min; and
- maintaining the final sintering temperature for about 1 hour to about four hours.

The honeycomb structure may be sintered at a temperature in the range from between 1200°C and 1700°C, or between about 1250°C and 1650°C, or between about 1350°C and 1650°C, or between 1400 °C and 1600°C, or between about 1450°C and 1600°C, or between about 1500°C and 1600°C. In certain embodiments, the sintering step is performed at temperature between about 1520°C and 1600°C, or between about 1530°C and 1600°C, or between about 1540°C and 1600°C, or between about 1550°C and 1600°C. In certain embodiment, the sintering temperature is less than about 1575°C.

For embodiments of the invention in which the ceramic precursor composition comprises a major amount of mullite-forming components/compositions and tialite-forming components compositions, e.g., a ceramic precursor composition according to the third aspect of the invention, the above components/compositions undergo chemical reactions resulting in the formation of mullite and tialite. These reactions, as well as the required reactions conditions, are known to persons skilled in the art. A summary is given in the textbook of W. Kollenberg (ed.), Technische Keramik, Vulkan-Verlag, Essen, Germany, 2004.

For embodiments in which at least part of the mullite and tialite are already formed in the ceramic precursor composition, e.g., a ceramic precursor composition according to the fourth aspect of the present invention, the number of competing reactions during sintering is reduced and comprise substantially only primary and secondary mullitization. A further advantage in using a precursor composition comprising already formed mullite and tialite is better control of the amounts of these mineral phases in the sintered ceramic composition or honeycomb structure.

Sintering may be performed for a suitable period of time and a suitable temperature such that the mullite and tialite mineral phases constitute at least about 80 % of the total weight of the mineral phases, for example, at least about 85 % of the total weight of the mineral phases, or at least about 90 % of the total weight of the mineral phases, or at least about 92 % of the total weight of the mineral phases, or at least about 94 %, or at least about 96 %, or at least about 97 %, or at least about 98 %, or at least about 99 % of total weight of the mineral phases.

### Ceramic Honeycomb Structures:

In the ceramic honeycomb structures described in the above embodiments, the optimal pore diameter is in the range between 5 to 30 µm, or 10 to 25 µm. Depending on the intended use of the ceramic honeycombs, in particular with regard to the question whether the ceramic honeycomb structure is further impregnated, e.g., with a catalyst, the above values may be varied. For non-impregnated ceramic honeycomb structures, the pore diameter is usually in the range between 7 and 15 µm, while for impregnated structures, the range is usually between 10 and 25 µm prior to impregnating, for example, between 15 and 25 µm, or between about 20 and 25 µm prior to impregnating. The catalyst material deposited in the pore space will result in a reduction of the original pore diameter.

The honeycomb structure of the invention can typically include a plurality of cells side by side in a longitudinal direction that are separated by porous partitions and plugged in an alternating (e.g., checkerboard) fashion. In one embodiment, the cells of the honeycomb structure are arranged in a repeating pattern. The cells can be square, round, rectangular, octagonal, polygonal or any other shape or combination of shapes that are suitable for arrangement in a repeating pattern. Optionally, the opening area at one end face of the honeycomb structural body can be different from an opening area at the other end face thereof. For example, the honeycomb structural body can have a group of large volume through-holes plugged so as to make a relatively large sum of opening areas on its gas inlet side and a group of small volume through-holes plugged so as to make a relatively small sum of opening areas on its gas outlet side.

In certain embodiments, the cells of the honeycomb structure are arranged in accordance with the structures described in WO-A-2011/117385.

An average cell density of the honeycomb structure of the present invention is not limited. The ceramic honeycomb structure may have a cell density between 6 and 2000 cells/square inch (0.9 to 311 cells/cm²), or between 50 and 1000 cells/square inch (7.8 to 155 cells/cm²), or between 100 and 400 cells/square inch (15.5 to 62.0 cells/cm²).

The thickness of the partition wall separating adjacent cells in the present invention is not limited. The thickness of the partition wall may range from 100 to 500 microns, or from 200 to 450 microns.

Moreover, the outer peripheral wall of the structure is preferably thicker than the partition walls, and its thickness may be in a range of 100 to 700 microns, or 200 to 400 microns. The outer peripheral wall may be not only a wall formed integrally with the partition wall at the time of the forming but also a cement coated wall formed by grinding an outer periphery into a predetermined shape.

In certain embodiments, the ceramic honeycomb structure is of a modular form in which a series of ceramic honeycomb structures are prepared in accordance with the present invention and then combined to form a composite ceramic honeycomb structure. The series of honeycomb structures may combined whilst in the green state, prior to sintering or, alternatively, may be individually sintered, and then combined. In certain embodiments, the composite ceramic honeycomb structure may comprise a series of ceramic honeycomb structures prepared in accordance with the present invention and ceramic honeycomb structures not in accordance with the present invention.

For the use as diesel particulate filters, the ceramic honeycomb structures of the present invention, or the green ceramic honeycomb structures of the present invention can be further processed by plugging, i.e., close certain open structures of the honeycomb at predefined positions with additional ceramic mass. Plugging processes thus include the preparation of a suitable plugging mass, applying the plugging mass to the desired positions of the ceramic or green honeycomb structure, and subjecting the plugged honeycomb structure to an additional sintering step, or sintering the plugged green honeycomb structure in one step, wherein the plugging mass is transformed into a ceramic plugging mass having suitable properties for the use in diesel particulate filters. It is not required that the ceramic plugging mass is of the same composition as the ceramic mass of the honeycomb body. Generally, methods and materials for plugging known to the person skilled in the art may be applied for the plugging of the honeycombs of the present invention.

The plugged ceramic honeycomb structure may then be fixed in a box suitable for mounting the structure into the exhaust gas line of a diesel engine, for example, the diesel engine of a vehicle (e.g., automobile, truck, van, motorbike, digger, excavator, tractor, bulldozer, dump-truck, and the like).

### EXAMPLES

The invention will now be described, by way of example only and without limitation, with reference to the following Figure and Examples, in which:

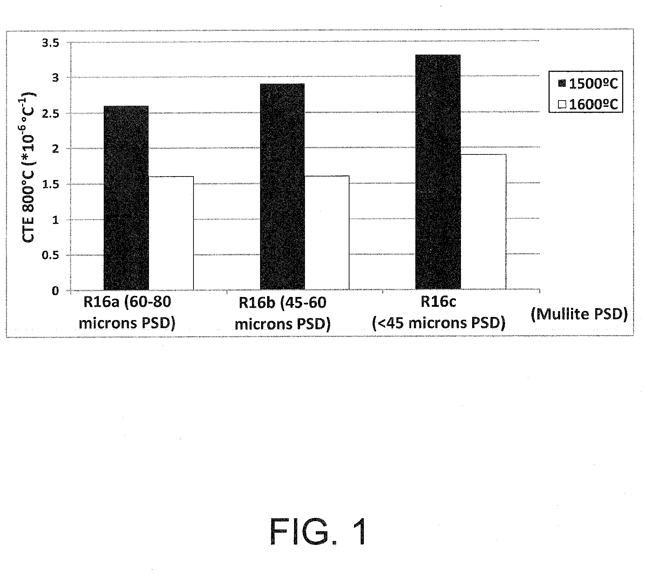

Figure 1 illustrates results obtained in connection with Example 6.

### Example 1

The components listed in Table 1 were mixed together.

**Table 1.**

| Component | % weight |
|---|---|
| Alumina | 44.6% |
| Aluminosilicate | 22.0% |
| TiO₂ precursor | 33.4% |
| ZrO₂ precursor | 0.0% |
| Total solid content | 100.0% |
| Water and binders | 35.0% |
| Total | 135.0% |

The resulting product was dried in a drying-oven and then fired at a temperature of 1600°C for 4 hours. The resulting chamotte comprises 71 % tialite, 27 % mullite 3:2, 1 % corundum and 1 % of an amorphous phase. The chamotte had a CTE at 800°C of 0.8 x 10⁻⁶ °C⁻¹. At 1600°C the phases are completely formed.

### Example 2

A series of ceramic compositions were obtained from a ceramic precursor composition comprising varying amounts of the TM chamotte prepared in Example 1. Compositional analysis and thermomechanical properties are summarised in Tables 2 and 3. Samples R1 and R2-1 were fired at a maximum temperature of 1520 °C (2 hour soaking time). Samples R2-2 and R3 were fired a maximum temperature of 1530 °C (2 hour soaking time). R3 has a very high tialite content (79 wt. %) and is included for comparative purposes. R2-2 is of the invention.

**Table 2.**

| **Recipe** | **R1** | **R2-1** | **R2-2** | **R3** |
|---|---|---|---|---|
| **Raw materials** | **(weight %)** | **(weight %)** | **(weight %)** | **(weight %)** |
| Aluminosilicate precursor | 33.6% | 24.1% | 24.1% | 0.0% |
| Tialite - mullite chamotte | 52.3% | 65.2% | 65.2% | 64.0% |
| TiO₂ | 0.0% | 0.0% | 0.0% | 14.7% |
| Alumina | 11.1% | 7.8% | 7.8% | 18.5% |
| Mg Precursor | 0.0% | 0.0% | 0.0% | 0.0% |
| Zr precursor | 3.0% | 2.9% | 2.9% | 2.8% |
| Total solid content | 100.0% | 100.0% | 100.0% | 100.0% |
| Pore former | 10.6% | 8.7% | 8.7% | 8.5% |
| Water and binders | 35.1% | 33.4% | 33.4% | 32.8% |
| Total | 145.7% | 142.0% | 142.0% | 141.3% |

As can be seen, CTE decreases with increasing tialite content. Further, whilst MOR is seen to decrease with increasing tialite content, it remains within acceptable ranges suitable for diesel particulate filter applications.

**Table 3.**

| **Recipe** | | **R1** | **R2-1** | **R2-2** | **R3** |
|---|---|---|---|---|---|
| XRD measur. (% weight) | Mullite | 71 | 63 | 55 | 17 |
| | Tialite | 26 | 35 | 42 | 79 |
| | Corundum | 1 | 1 | 1 | 4 |
| | Amorph. | 2 | 0 | 1 | 0 |
| | Others | 0 | 1 | 1 | 0 |
| MOR | (MPa) | 3 | 2 | 3 | 2 |
| CTE (800°C) | (10E-6 °C⁻¹) | 4.1 | 3.4 | 3.1 | 1.4 |
| Young Modulus | (GPa) | 23 | 14 | 7 | 7 |
| Ratio MOR/CTE | (Pa*°C) | 7.32E+11 | 6.76E+11 | 8.39E+11 | 1.43E+12 |
| R1* [MOR/(CTE*Ymod)] | (°C) | 32 | 47 | 118 | 201 |
| Pore size (d₅₀) | (microns) | 6.5 | 5.7 | 5.7 | 5.8 |
| Porosity | (%v) | 48 | 44 | 43 | 44 |

### Example 3

A further series of samples were prepared. Ceramic precursor compositions are described in Table 4. The TM chamotte in each precursor composition was the TM chamotte prepared in Example 1 which had been jet milled separately to obtain a d₅₀ of about 15 µm. Each sample was fired at 1550°C for 1 hour. Compositional analysis and thermomechanical properties of the sintered material is summarized in Tables 5 and 6.

**Table 5.**

| **Recipe** | | **R5** | **R7** | **R4** | **R8** |
|---|---|---|---|---|---|
| Zr precursor (% weight) | | 0.0% | 1.7% | 2.9% | 3.8% |
| XRD measur. (% weight) | Mullite | 45 | 54 | 49 | 48 |
| | Tialite | 44 | 40 | 41 | 43 |
| | Corundum | 7 | 3 | 3 | 3 |
| | Amorph. | 2 | 1 | 3 | 1 |
| | Others | 2 | 2 | 4 | 5 |
| CTE (800°C) | (10E-6 °C⁻¹) | 4.5 | 3.4 | 3.1 | 2.8 |
| Pore size (d₅₀) | (microns) | 5.7 | 6.9 | 5.7 | 6.0 |
| Porosity | (%v) | 42 | 43 | 37 | 36 |

**Table 6.**

| **Recipe** | | **R5** | **R6** | **R9** |
|---|---|---|---|---|
| Mg precursor (% weight) | | 0.0% | 0.6% | 3.8% |
| XRD measur. (% weight) | Mullite | 45 | 46 | 48 |
| | Tialite | 44 | 44 | 42 |
| | Corundum | 7 | 7 | 7 |
| | Amorph. | 2 | 1 | 0 |
| | Others | 2 | 2 | 3 |
| CTE (800°C) | (10E-6 °C⁻¹) | 4.5 | 4.3 | 3.3 |
| Pore size (d₅₀) | (microns) | 5.7 | 6.1 | 7.6 |
| Porosity | (%v) | 42 | 38 | 31 |

As can be seen, for a fixed sintering temperature (1550°C), as the ZrO₂ content increases, the CTE and the alumina content decrease. Further, the presence of ZrO₂ in the ceramic precursor composition accelerates mullitization (primary and secondary). On the other hand, shrinkage increases with increasing ZrO₂ content.

With regard to MgO content, it is found that as the amount of MgO is increased, CTE increases. Differently to ZrO₂, the presence of the Mg precursor does not affect the unreacted alumina content.

**Table 4.**

| **Recipe** | **R4** | **R5** | **R6** | **R7** | **R8** | **R9** |
|---|---|---|---|---|---|---|
| Raw materials | (weight %) | (weight %) | (weight %) | (weight %) | (weight %) | (weight %) |
| Aluminosilicate precursor | 24.1% | 25.0% | 24.9% | 24.3% | 23.8% | 23.8% |
| Tialite - mullite chamotte | 65.2% | 67.1% | 66.8% | 66.0% | 64.6% | 64.6% |
| Alumina | 7.8% | 7.8% | 7.8% | 7.9% | 7.8% | 7.8% |
| Mg Precursor | 0.0% | 0.0% | 0.6% | 0.0% | 0.0% | 3.8% |
| Zr precursor | 2.9% | 0.0% | 0.0% | 1.7% | 3.8% | 0.0% |
| Total solid content | 100.0% | 100.0% | 100.0% | 100.0% | 100.0% | 100.0% |
| Pore former | 8.7% | 8.7% | 8.7% | 8.7% | 8.7% | 8.7% |
| Water and binders | 36.0% | 36.0% | 36.0% | 36.0% | 36.0% | 36.0% |
| Total | 144.7% | 144.7% | 144.7% | 144.7% | 144.7% | 144.7% |

### Example 4

A further series of samples were prepared. Ceramic precursor compositions are described in Table 7. Each sample was fired at 1550°C for 1 hour. Compositional analysis and thermomechanical properties of the sintered material is summarized in Table 8.

**Table 7.**

| **Recipe** | **R10** | **R11** | **R12** |
|---|---|---|---|
| **Raw materials** | **(weight %)** | **(weight %)** | **(weight %)** |
| Aluminosilicate precursor | 33.0% | 33.0% | 29.2% |
| TiO₂ | 23.2% | 23.2% | 25.4% |
| Alumina | 39.9% | 39.9% | 41.5% |
| Mg Precursor | 1.2% | 1.2% | 1.2% |
| Zr precursor | 2.6% | 2.6% | 2.6% |
| Total solid content | 100.0% | 100.0% | 100.0% |
| Pore former | 9.6% | 19.1% | 9.6% |
| Water and binders | 34.8% | 40.2% | 34.8% |
| Total | 144.4% | 159.3% | 144.4% |

**Table 8.**

| **Recipe** | | **R10** | **R11** | **R12** |
|---|---|---|---|---|
| XRD measur. (% weight) | Mullite | 40 | 45 | 40 |
| | Tialite | 49 | 46 | 50 |
| | Corundum | 4 | 6 | 6 |
| | Amorph. | 4 | 0 | 2 |
| | Others | 3 | 3 | 2 |
| CTE (800°C) | (10E-6 °C⁻¹) | 1.7 | 1.6 | 1.2 |
| Pore size (d₅₀) | (microns) | 9.2 | 12.8 | 10.2 |
| Porosity | (%v) | 33 | 41 | 33 |

### Example 5

A further series of samples were prepared. Ceramic precursor compositions are described in Table 9. Each sample was fired at 1550°C for 1 hour. Compositional analysis and thermomechanical properties of the sintered material is summarized in Table 10. Recipes R13 and R14 are of the invention.

**Table 9.**

| **Recipe** | **R13** | **R14** | **R15** |
|---|---|---|---|
| **Raw materials** | **(weight %)** | **(weight %)** | **(weight %)** |
| Mullite chamotte | 50.0% | 51.0% | 50.3% |
| titanium oxide | 21.6% | 21.9% | 21.6% |
| Alumina | 27.5% | 24.5% | 24.2% |
| Mg Precursor | 0.0% | 0.0% | 1.3% |
| Zr precursor | 0.9% | 2.6% | 2.6% |
| Total solid content | 100.0% | 100.0% | 100.0% |
| Pore former | 13.9% | 22.7% | 13.9% |
| Water and binders | 36.6% | 39.4% | 36.6% |
| Total | 150.5% | 162.1 % | 150.5% |

**Table 10.**

| **Recipe** | | **R13** | **R14** | **R15** |
|---|---|---|---|---|
| XRD measur. (% weight) | Mullite | 45 | 54 | 46 |
| | Tialite | 46 | 40 | 44 |
| | Corundum | 7 | 3 | 6 |
| | Amorph. | 0 | 1 | 0 |
| | Others | 2 | 2 | 4 |
| CTE (800°C) | (10E-6 °C⁻¹) | 3.1 | 3.2 | 1.7 |
| Pore size (d₅₀) | (microns) | 7.3 | 7.8 | 9.5 |
| Porosity | (%v) | 38 | 41 | 29 |

### Example 6

A further series of samples were prepared. Ceramic precursor compositions are described in Table 11. Each sample was fired at 1500°C for 1 hour and at 1600°C for 1 hour. Thermomechanical properties of the sintered materials are summarized in Figure 1. Figure 1 also provides details of the particle size distribution of the mullite used in the ceramic precursor composition in accordance with Table 11.

**Table 11.**

| **Recipe** | **R16** |
|---|---|
| **Raw materials** | **(weight %)** |
| Mullite chamotte | 49.3% |
| Titanium oxide | 21.4% |
| Alumina | 27.2% |
| Mg Precursor | 1.2% |
| Zr precursor | 0.9% |
| Total solid content | 100.0% |
| Porous agent | 0.0% |
| Water and binders | 38.3% |
| Total | 138.4% |

In one aspect, the invention can provide physical properties (in concrete CTE and Young Modulus) that would correspond to a recipe with a higher content of tialite, with a recipe that presents a mullite-tialite ratio with low tialite content. Without wishing to be bound by theory, this is thought to be related to the distribution of mullite and tialite grains in the microstructure depending on the firing conditions.

In one aspect, the tialite can be distributed covering the mullite in the microstructure. The macroscopic effect is the diminution of the CTE (and Young Modulus) of the composition in a higher degree than in a homogenous mullite-tialite distribution. In this sense, the grain size distribution of the raw materials and its repartition in the microstructure can impact the physical properties in a fixed firing cycle.

In another aspect, the maximum temperature gradient supported by the composite recipe may be correlated to the grain size distribution of the mullite and tialite coverage distribution in the microstructure in the optimal firing conditions (optimal tialite microcracking conditions).

## Claims

1. A ceramic composition comprising:
from 25 wt. % to 60 wt. % tialite;
from 35 wt. % to 60 wt. % mullite;
from 0.1 wt. % to 8 wt. % zirconia and/or from 0.1 wt. % to 10 wt. % zirconium titanate;
from 0 wt. % to 10 wt. % of an amorphous phase;
from 0 wt. % to 5 wt. % of an alkaline earth metal oxide; and
from 0 wt. % to 10 wt. % alumina (calculated on the basis of the total weight of mineral phases);
wherein said ceramic composition has a porosity of from 30 % to 70 % (calculated on the basis of the total volume of the mineral phases and pore space).

2. A ceramic composition according to claim 1, comprising at least 40 wt.% tialite.

3. A ceramic composition according to claim 2, comprising from 45 wt. % to 55 wt. % tialite, for example, from 45 wt. % to 50 wt. % tialite or, for example, from 50 wt. % to 55 wt. % tialite.

4. A ceramic composition according to any preceding claim, comprising from 40 wt.% to 60 wt. % mullite.

5. A ceramic composition according to any preceding claim, comprising no greater than 5 wt. % zirconia, for example, no greater than 3 wt. % zirconia or, no greater than 2 wt. % zirconia or, no greater than 1 wt. % zirconia.

6. A ceramic composition according to any preceding claim, wherein said composition has a porosity of from 35 % to 65 % and/or wherein said composition has a modulus of rupture (MOR) of at least 1.5 MPa and/or a coefficient of thermal expansion (CTE) of equal to or less than 3.5 x 10⁻⁶°C⁻¹.

7. A ceramic composition according to any one of claims 1 to 6, wherein the ceramic composition comprises at least 0.1 wt% of said amorphous phase, and/or at least 0.1 wt% alumina, and/or at least 0.1 wt% alkaline earth metal oxide.

8. A ceramic composition according to any preceding claim in the form of a honeycomb structure.

9. A ceramic precursor composition suitable for sintering to form a ceramic composition according to claim 1, said precursor composition comprising:
from 20 wt. % to 55 wt. % aluminosilicate;
from 15 wt. % to 35 wt. % titania and/or titania precursor;
from 25 wt. % to 45 wt. % alumina (Al₂O₃);
from 0 wt. % to 5 wt. % alkaline earth metal oxide and/or alkaline earth metal oxide precursor;
from 0.5 wt. % to 15 wt. % zirconia and/or zirconia precursor;
and from 1 wt. % to 30 wt. % pore former.

10. A ceramic precursor composition suitable for firing to form a ceramic composition according to claim 1, said precursor composition comprising:
from 20 wt. % to 55 wt. % aluminosilicate;
from 45 wt. % to 75 wt. % of a tialite- and mullite-containing chamotte;
from 0 wt. % to 20 wt. % alumina;
from 0 wt. % to 5 wt. % alkaline earth metal oxide and/or alkaline earth metal oxide precursor;
from 0.5 wt. % to 15 wt. % zirconia and/or zirconia precursor;
and from 1 wt. % to 30 wt. % pore former.

11. A ceramic precursor composition according to any one of claims 9 to 10, wherein the precursor composition comprises at least 0.5 wt% of said alkaline earth metal oxide and/or alkaline earth metal oxide precursor.

12. A method for making a ceramic honeycomb structure according to claim 8, said method comprising the steps of:
(a) providing a dried green honeycomb structure formed from the ceramic precursor composition according to any one of claims 9-11; and
(b) sintering.

13. A method according to claim 12, wherein sintering is performed at a temperature between 1200°C and 1700°C, for example, between 1350°C and 1650°C, or between 1400°C and 1600°C, or between 1500°C and 1600°C.

14. A diesel particulate filter comprising or made from the ceramic honeycomb structure according to claim 8 or the ceramic honeycomb structure obtainable by the method of any one of claims 12-13 and wherein the diesel particulate filter may be comprised in a vehicle having a diesel engine and a filtration system.

## Patentansprüche

1. Eine Keramikzusammensetzung bestehend aus:
Von 25 Gew.-% bis 60 Gew.-% Tialit;
von 35 Gew.-% bis 60 Gew.-% Mullit;
von 0,1 Gew.-% bis 8 Gew.-% Zirkondioxid und/oder von 0,1 Gew.-% bis 10 Gew.-% Zirkonium-Titanat;
von 0 Gew.-% bis 10 Gew.-% einer amorphen Phase;
von 0 Gew.-% bis 5 Gew.-% eines Erdalkalimetalloxids; und
von 0 Gew.-% bis 10 Gew.-% eines Aluminiumoxids (berechnet auf Basis des Gesamtgewichts von mineralischen Phasen);
worin die genannte Keramikzusammensetzung eine Porosität von 30 % bis 70 % aufweist (berechnet auf Basis des Gesamtvolumens der mineralischen Phasen und Porenraum).

2. Eine Keramikzusammensetzung gemäß Anspruch 1, bestehend aus zumindest 40 Gew.-% Tialit.

3. Eine Keramikzusammensetzung gemäß Anspruch 2, bestehend aus 45 Gew.-% bis 55 Gew.-% Tialit, zum Beispiel, aus 45 Gew.-% bis 50 Gew.-% Tialit oder, zum Beispiel, aus 50 Gew.-% bis 55 Gew.-% Tialit.

4. Eine Keramikzusammensetzung gemäß allen vorangehenden Ansprüchen, bestehend aus 40 Gew.-% bis 60 Gew.-% Mullit.

5. Eine Keramikzusammensetzung gemäß allen vorangehenden Ansprüchen, bestehend aus nicht mehr als 5 Gew.-% Zirkondioxid, zum Beispiel, nicht mehr als 3 Gew.-% Zirkondioxid oder, nicht mehr als 2 Gew.-% Zirkondioxid oder, nicht mehr als 1 Gew.-% Zirkondioxid.

6. Eine Keramikzusammensetzung gemäß allen vorangehenden Ansprüchen, worin die Zusammensetzung eine Porosität von 35 % bis 65 % aufweist und/oder worin die Zusammensetzung ein Bruchmodul von zumindest 1,5 MPa und/oder einen Wärmeausdehnungskoeffizient von gleich oder weniger als 3,5 x 10⁻⁶ °C⁻¹ aufweist.

7. Eine Keramikzusammensetzung gemäß jedem der vorangehenden Ansprüchen 1 bis 6, worin die Keramikzusammensetzung aus zumindest 0,1 Gew.-% der amorphen Phase, und/oder zumindest 0,1 Gew.-% Aluminiumoxid, und/oder zumindest 0,1 Gew.-% Erdalkalimetalloxid besteht.

8. Eine Keramikzusammensetzung gemäß allen vorangehenden Ansprüchen in Form einer Wabenstruktur.

9. Eine Präkursor-Keramikzusammensetzung geeignet zum Sintern zur Bildung einer Keramikzusammensetzung gemäß Anspruch 1, wobei die Präkursor-Zusammensetzung besteht aus:
Von 20 Gew.-% bis 55 Gew.-% Aluminiumsilikat;
von 15 Gew.-% bis 35 Gew.-% Titandioxid und/oder Titandioxid-Präkursor;
von 25 Gew.-% bis 45 Gew.-% Aluminiumoxid (Al₂O₃);
von 0 Gew.-% bis 5 Gew.-% Erdalkalimetalloxid und/oder Erdalkalimetalloxid-Präkursor;
von 0,5 Gew.-% bis 15 Gew.-% Zirkondioxid und/oder Zirkondioxid-Präkursor;
und von 1 Gew.-% bis 30 Gew.-% Porenbildner.

10. Eine Präkursor-Keramikzusammensetzung geeignet zum Brennen zur Bildung einer Keramikzusammensetzung gemäß Anspruch 1, wobei die genannte Präkursor-Zusammensetzung besteht aus:
Von 20 Gew.-% bis 55 Gew.-% Aluminiumsilikat;
von 45 Gew.-% bis 75 Gew.-% aus einem Tialit- und/oder Mullit- enthaltenden Schamott;
von 0 Gew.-% bis 20 Gew.-% Aluminiumoxid;
von 0 Gew.-% bis 5 Gew.-% Erdalkalimetalloxid und/oder Erdalkalimetalloxid-Präkursor;
von 0,5 Gew.-% bis 15 Gew.-% Zirkondioxid und/oder Zirkondioxid-Präkursor;
und von 1 Gew.-% bis 30 Gew.-% Porenbildner.

11. Eine Präkursor-Keramikzusammensetzung gemäß allen vorangehenden Ansprüchen 9 bis 10, worin die Präkursor-Zusammensetzung aus zumindest 0,5 Gew.-% des Erdalkalimetalloxids und/oder des Erdalkalimetalloxid-Präkursors besteht.

12. Ein Verfahren zur Herstellung einer Keramik-Wabenstruktur gemäß Anspruch 8, worin das Verfahren aus folgenden Schritten besteht:
(a) Bereitstellung einer getrockneten grünen Wabenstruktur entstanden aus der Präkursor-Zusammensetzung gemäß jedem einzelnen der Ansprüche 9-11; und
(b) Sintern.

13. Ein Verfahren gemäß Anspruch 12, worin das Sintern bei einer Temperatur zwischen 1200 °C und 1700 °C erfolgt, zum Beispiel zwischen 1350 °C und 1650 °C, oder zwischen 1400 °C und 1600 °C, oder zwischen 1500 °C und 1600 °C.

14. Ein Dieselpartikelfilter, der gemäß Anspruch 8 aus einer Keramik-Wabenstruktur besteht oder davon hergestellt wird oder die Keramik-Wabenstruktur aus dem Verfahren gemäß jedem einzelnen der Ansprüche 12-13 erzielbar ist und worin der Dieselpartikelfilter in einem Fahrzeug mit Dieselmotor und einem Filtersystem enthalten sein kann.

## Revendications

1. Une composition céramique comprenant :
à partir de 25 % en poids à 60 % en poids de tialite ;
à partir de 35 % en poids à 60 % en poids de mullite ;
à partir de 0,1 % en poids à 8 % en poids de zircone et / ou à partir de 0,1% en poids à 10 % en poids de titanate de zirconium ;
à partir de 0 % en poids à 10 % en poids d'une phase amorphe ;
à partir de 0 % en poids à 5 % en poids d'un oxyde de métal alcalino-terreux ; et
à partir de 0 % en poids à 10 % en poids d'alumine (calculé sur la base du poids total des phases minérales) ;
dans lequel ladite composition céramique a une porosité de 30 % à 70 % (calculée sur la base du volume total des phases minérales et de l'espace poreux).

2. Une composition céramique selon la revendication 1, comprenant au moins 40 % en poids de tialite.

3. Une composition céramique selon la revendication 2, comprenant de 45 % en poids à 55 % en poids % de tialite, par exemple, de 45 % en poids à 50 % en poids % de tialite ou, par exemple, de 50 % en poids à 55 % en poids % de tialite.

4. Une composition céramique selon l'une quelconque des revendications précédentes, comprenant de 40 % en poids à 60 % en poids de mullite.

5. Une composition céramique selon l'une quelconque des revendications précédentes, ne comprenant pas plus de 5 % en poids de zircone, par exemple, pas plus de 3 % en poids de zircone ou, pas plus de 2 % en poids de zircone ou, pas plus de 1 % en poids de zircone.

6. Une composition céramique selon l'une quelconque des revendications précédentes, dans laquelle ladite composition a une porosité de 35 % à 65 % et/ou dans laquelle ladite composition a un module de rupture (MOR) d'au moins 1,5 MPa et/ou un coefficient de dilatation thermique (CTE) égale ou inférieure à 3,5 x 10 ⁻⁶⁰C⁻¹.

7. Une composition céramique selon l'une quelconque des revendications de 1 à 6, dans laquelle la composition céramique comprend au moins 0,1 % en poids de ladite phase amorphe, et/ou au moins 0,1 % en poids d'alumine, et / ou au moins 0,1 % en poids d'oxyde de métal alcalino-terreux.

8. Une composition céramique selon l'une quelconque des revendications précédentes sous la forme d'une structure en nid d'abeille.

9. Une composition de précurseur de céramique appropriée pour le frittage pour former une composition céramique selon la revendication 1, ladite composition de précurseur comprenant :
à partir de 20 % en poids à 55 % en poids d'aluminosilicate ;
à partir de 15 % en poids à 35 % en poids d'oxyde de titane et/ou de précurseur d'oxyde de titane ;
à partir de 25 % en poids à 45 % en poids % d'alumine (Al₂O₃) ;
à partir de 0 % en poids à 5 % en poids d'oxyde métallique alcalino-terreux et/ou de précurseur d'oxyde de métal alcalino-terreux ;
à partir de 0,5 % en poids à 15 % en poids de zircone et/ou de précurseur de zircone ; et à partir de 1 % en poids à 30 % en poids d'ancien porogène.

10. Une composition de précurseur de céramique appropriée pour la cuisson pour former une composition céramique selon la revendication 1, ladite composition de précurseur comprenant :
à partir de 20 % en poids à 55 % en poids d'aluminosilicate ;
à partir de 45 % en poids à 75 % en poids d'une chamotte contenant de la tialite et de la mullite ; à partir de 0 % en poids à 20 % en poids d'alumine ;
à partir de 0 % en poids à 5 % en poids d'oxyde métallique alcalino-terreux et/ou de précurseur d'oxyde de métal alcalino-terreux ;
à partir de 0,5 % en poids à 15 % en poids de zircone et/ou de précurseur de zircone; et à partir de 1 % en poids à 30 % en poids d'ancien porogène.

11. Une composition de précurseur de céramique selon l'une quelconque des revendications de 9 à 10, dans laquelle la composition de précurseur comprend au moins 0,5 % en poids dudit oxyde de métal alcalino-terreux et/ou d'un précurseur d'oxyde de métal alcalino-terreux.

12. Un procédé de fabrication d'une structure en nid d'abeilles en céramique selon la revendication 8, ledit procédé comprenant les étapes consistant à :
(a) fournir une structure en nid d'abeilles verte séchée formée à partir de la composition de précurseur de céramique selon l'une quelconque des revendications de 9 à 11 ; et
(b) le frittage.

13. Un procédé selon la revendication 12, dans lequel le frittage est effectué à une température comprise entre 1200 °C et 1700 °C, par exemple entre 1350 °C et 1650 °C, ou entre 1400 °C et 1600 °C, ou entre 1500 °C et 1600 °C.

14. Un filtre à particules diesel comprenant ou fabriqué à partir de la structure en nid d'abeilles en céramique selon la revendication 8 ou la structure en nid d'abeilles en céramique pouvant être obtenue par le procédé selon l'une quelconque des revendications de 12 à 13 et dans lequel le filtre à particules diesel peut être compris dans un véhicule comportant un moteur diesel et un système de filtration.
